# EUROPÄISCHE PATENTSCHRIFT

(11) **EP 1 342 562 B1**
(45) Veröffentlichungstag und Bekanntmachung des Hinweises auf die Patenterteilung: **12.04.2006**
(21) Anmeldenummer: 03000156.4
(22) Anmeldetag: 04.01.2003
(51) Int. Cl.: B32B 5/26, B32B 5/04, B32B 7/04, D04H 13/00

(54) **Verfahren zur Herstellung einer luftdurchlässigen Verbundfolie mit textiler Oberfläche, die elastische und nichtelastische Bereiche aufweist**
Method for manufacturing an air permeable composite film with a textile surface, having elastic and nonelastic zones
Procédé de production d'un film multicouche perméable à l'air et surface textile, ayant des zones élastiques et non élastiques

(30) Priorität: 09.03.2002 DE 10210415
(43) Veröffentlichungstag der Anmeldung: 10.09.2003
(73) Patentinhaber: Nordenia Deutschland Gronau GmbH, 48599 Gronau (DE)
(72) Erfinder: Hamulski, Markus, 48599 Gronau-Epe (DE); Schönbeck, Marcus, 33775 Versmold (DE); Baldauf, Georg, 48366 Laer (DE)
(74) Vertreter: Albrecht, Rainer Harald

(56) Entgegenhaltungen:
- EP-A- 0 703 068
- WO-A-94/14607
- DE-A- 4 238 541
- GB-A- 1 389 201
- US-A- 5 344 691
- DATABASE WPI Section Ch, Week 199728 Derwent Publications Ltd., London, GB; Class A32, AN 1997-306074 XP002245600 & JP 09 117982 A (KURARAY CO LTD), 6. Mai 1997 (1997-05-06)

## Beschreibung

Die Erfindung betrifft ein Verfahren zur Herstellung einer luftdurchlässigen Verbundfolie mit textiler Oberfläche, die elastische und nichtelastische Bereiche aufweist. Derartige Verbundfolien werden beispielsweise bei der Fabrikation von Windelhöschen als elastische Abschlussmanschetten, Schließbänder und dergleichen verwendet. Sie müssen in vorgegebenen Abschnitten sehr elastisch sein. Zur Verbesserung des Tragekomforts besitzen sie eine textile Oberfläche und sind luftdurchlässig.

Bei einem aus DE 42 38 541 Al bekannten Verfahren werden Materialbahnen aus Faservlies auf eine elastische Trägerfolie aufgebracht und durch Ultraschallschweißung punktförmig mit dieser verbunden. An den Schweißstellen wird die Trägerfolie durchgeschmolzen, wobei die außenseitigen Vliesbahnen in das partiell aufschmelzende Material der Trägerfolie eingebunden werden. Es entstehen luftdurchlässige Bereiche, die von einer feinen, aus Vliesfäden erhaltenen Netzstruktur überdeckt sind. Der Kaschierverbund wird anschließend in Abzugsrichtung gedehnt und wieder entspannt. Hierdurch erhält die Verbundfolie ihre Elastizität. Nachteilig ist, dass die nach dem bekannten Verfahren hergestellte Verbundfolie sich im Gebrauch über ihre gesamte Länge annähernd gleichmäßig dehnt und die Dehnung nicht auf vorgegebene Abschnitte konzentriert ist.

US534469 lehrt, daß mehrere abwechselnde, nichtelastische Zonen zwischen elastischer Folie und Textil durch die Bindung mittels Klebstoff erzielt werden können. Es offenbart einen 2-lagigen Verbund aus nicht-elastischem Film und elastischem Film. Es gibt auch keine Bereiche mit unterschiedlicher Lagenanzahl und die Folie ist mit dem Textil vollflächig über dieselbe Breite miteinander verbunden.

EP703068 lehrt die Bereitstellung von parallelen, alternierenden longitudinalen Bändern von inetastischen und elastischen Regionen in 3-lagigen Verbunden mit zwei äußeren unelastischen, sowie einer innenliegenden elastischen Lage mittels der Heißschmelzung der innenliegenden Lage in den Bereichen, die dadurch unelastisch werden.

Der Erfindung liegt die Aufgabe zugrunde, ein Verfahren zur Herstellung einer luftdurchlässigen Verbundfolie mit textiler Oberfläche anzugeben, die elastische und nichtelastische Bereiche aufweist.

Gegenstand der Erfindung und Lösung dieser Aufgabe ist ein Verfahren nach Anspruch 1. Erfindungsgemäß wird mindestens ein in Querrichtung elastischer Folienstreifen als elastische Einlage zwischen zwei Materialbahnen aus Faservlies eingebracht, deren Bahnbreite größer ist als die Breite des Folienstreifens. Die neben der Einlage unmittelbar in Kontakt stehenden Abschnitt der aus Faservlies bestehenden Materialbahnen werden unter Bildung eines nichtelastischen Bereiches der Verbundfolie verbunden. Anschließend durchläuft der Kaschierverbund eine Ultraschallschweißstation, in der die elastische Einlage durch punktförmige Schweißungen unter Beibehaltung der Substanz des Faservlieses aufgeschmolzen und dabei unter Bildung von luftdurchlässigen Strukturen an diskreten Punkten mit den aus Faservlies bestehenden Deckschichten verbunden wird.

Erfindungsgemäß können mehrere parallele, zueinander beabstandete Streifen zwischen die aus Faservlies bestehenden Materialbahnen eingebracht werden. Die aus Faservlies bestehenden Deckschichten werden in den nichtelastischen Bereichen der Verbundfolie vorzugsweise flächig miteinander verklebt. Als Klebstoffe sind beispielsweise Hotmeltklebstoffe einsetzbar, die auf die miteinander zu verklebenden Materialbahnen aufgesprüht werden können.

Vorzugsweise wird der Kaschierverbund in der Ultraschallschweißstation über eine Schweißwalze mit umfangsseitig vorstehenden Schweißstacheln geführt, wobei an den Kontaktflächen zwischen den Schweißstacheln und dem Kaschierverbund Ultraschallschwingungen erzeugt werden. Das Ultraschallwerkzeug kann insbesondere in Form von zwei Walzen ausgeführt werden, wobei eine Walze eine glatte Umfangsfläche aufweist und ein Widerlager für den Schweißvorgang bildet und die andere Walze als Schweißwalze mit umfangsseitig vorstehenden Schweißstacheln ausgebildet ist und die Sonotrode des Werkzeuges darstellt.

Als elastische Einlage können Folienstreifen aus einem thermoplastischen Elastomer oder durch Coextrusion hergestellte mehrschichtige Folienstreifen mit mindestens einer Schicht aus einem thermoplastischem Elastomer verwendet werden. Bei Verwendung eines durch Coextrusion hergestellten mehrschichtigen Folienstreifens kann das Material der mit dem Faservlies in Kontakt tretenden Schichten nach zusätzlichen Gesichtspunkten festgelegt und optimiert werden. Es ergeben sich Vorteile, wie zum Beispiels eine bessere Kontrolle der Verbundhaftung zwischen der elastischen Einlage der Folie und dem außenseitigen Faservlies. Durch geeignete Festlegung des Materials kann ferner die Beständigkeit der Verbundfolie gegen Umwelteinflüsse und gegen Substanzen, zum Beispiel in Hautschutzmitteln, verbessert werden.

Zur Verbesserung des Dehnungsvermögens der Verbundfolie in den elastischen Bereichen lehrt die Erfindung in weiterer Ausgestaltung, dass die aus Faservlies bestehenden Materialbahnen zumindest in den Abschnitten, die mit der elastischen Einlage verbunden sind, quer zu Laufrichtung vorverstreckt werden bevor der Kaschierverbund hergestellt wird. Bei der Vorverstreckung in Querrichtung wird das Fasergebilde aufgelockert und teilweise zerstört. Es entsteht eine Struktur, die sich mit geringem Kraftaufwand in die vorgedehnte Richtung verformt. Ferner kann der die Ultraschweißstation verlassende Kaschierverbund quer zur Abzugsrichtung gereckt oder in den elastischen Bereich einer inkrementalen Verstreckung unterworfen werden. Eine derartige mechanische Aktivierung des Kaschierverbundes verbessert das Dehnungsverhalten Verbundfolie.

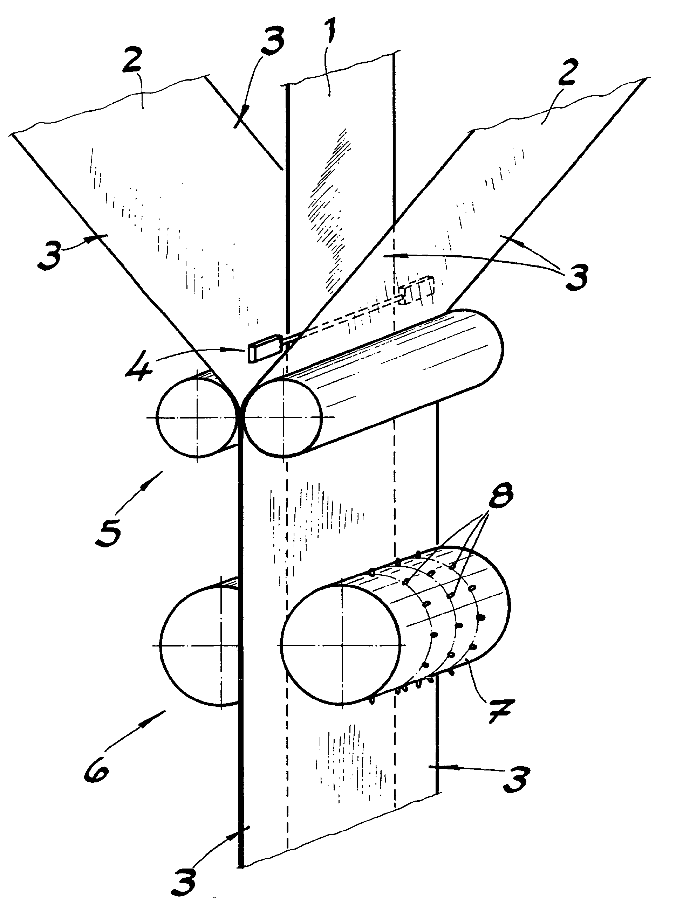

Im Folgenden wird die Erfindung anhand einer lediglich ein Ausführungsbeispiel darstellenden Zeichnung erläutert. Die einzige Figur zeigt ein Verfahrensschema des erfindungsgemäßen Verfahrens zur Herstellung einer luftdurchlässigen Verbundfolie mit textiler Oberfläche, die elastische und nichtelastische Bereiche aufweist.

Bei dem in der Figur dargestellten Verfahren wird mindestens ein in Querrichtung elastischer Folienstreifen 1 als elastische Einlage zwischen zwei Materialbahnen 2 aus Faservlies eingebracht, deren Bahnbreite größer ist als die Breite des Folienstreifens 1. Die neben der Einlage unmittelbar in Kontakt stehenden Abschnitte 3 der aus Faservlies bestehenden Materialbahnen werden unter Bildung eines jeweils nichtelastischen Bereiches der Verbundfolie verbunden. Im Ausführungsbeispiel erfolgt eine flächige Verklebung dieser Abschnitte 3, wobei der Klebstoff mit einer Auftragseinrichtung 4 vor dem Einlauf der Materialbahnen in ein Kaschierwerk 5 in Streifen auf mindestens eine der miteinander zu verklebenden Materialbahnen 2 aufgetragen wird.

Der Kaschierverbund durchläuft anschließend eine Ultraschallschweißstation 6, in der die elastische Einlage 1 durch punktförmige Schweißungen unter Beibehaltung der Substanz des Faservlieses aufgeschmolzen und dabei unter Bildung von luftdurchlässigen Strukturen an diskreten Punkten mit den aus Faservlies bestehenden Deckschichten verbunden wird. Für die punktförmigen Ultraschallschweißungen wird eine Schweißwalze 7 verwendet, die umfangsseitig vorstehende Schweißstacheln 8 aufweist. Der Kaschierverbund wird über die Umfangsfläche der Walze 7 geführt, wobei an den Kontaktflächen zwischen den Schweißstacheln 8 und dem Kaschierverbund Ultraschallschwingungen erzeugt werden. Zu diesem Zweck können die Schweißstachel 8 mit Ultraschallköpfen ausgerüstet sein. Dabei sollen jedoch auch anderweitige Einrichtungen, mit denen punktförmige Ultraschallschweißungen an Kunststofffolien vorgenommen werden können, nicht ausgeschlossen werden.

Bei dem in der Figur dargestellten Verfahren wird als elastische Einlage ein Folienstreifen 1 aus einem thermoplastischen Elastomer verwendet. Für das Verfahren eignet sich ferner auch ein durch Coextrusion hergestellter mehrschichtiger Folienstreifen mit mindestens einer Schicht aus einem thermoplastischem Elastomer. In der Figur ist nur eine Einlage aus einem elastischen Folienstreifen dargestellt. Im Rahmen der Erfindung liegt es auch, dass mehrere parallele, zueinander beabstandete Streifen zwischen die aus Faservlies bestehenden Materialbahnen eingebracht werden. Die Anordnung und Breite der elastischen Folienstreifen wird anwendungsabhängig festgelegt.

Die nach dem erfindungsgemäßen Verfahren hergestellte Verbundfolie kann anschließend quer zur Abzugsrichtung direkt oder in den elastischen Bereichen einer inkrementalen Verstreckung unterworfen werden. Für die mechanische Nachbehandlung kann dabei auf bekannte, hier nicht dargestellte Einrichtungen zurückgegriffen werden.

### Beispiele

Nach dem beschriebenen Verfahren wurde auf einer Kaschiermaschine ein Kaschierverbund aus elastischen Folienstreifen und zwei Materialbahnen aus Polypropylenfaservlies hergestellt. Die elastischen Folienstreichen besaßen eine Breite vom 50 mm und eine Dicke von 75 µm und bestanden aus einem Compound auf Basis von Styrolethylenblockcopolymer (SEBS) mit einer Zugabe von Polyethylencopolymer. Dabei wurden mehrere parallel zueinander beabstandete elastische Folienstreifen dem Kaschierwerk zugeführt und zwischen die aus Faservlies bestehenden Materialbahnen eingebracht. In den Bereichen zwischen den Folienstreifen wurden die Faservlies-Bahnen miteinander verklebt und zwar unter Verwendung eines Polyurethanklebstoffes, der in einem Dreiwalzenauftragswerk auf das Faservlies aufgetragen wurde. Der Kaschierverbund durchlief anschließend eine Ultraschallschweißstation, in dem die Bereiche, in denen die elastischen Folienstreifen vorlagen, punktuell verschweißt wurden. Die Schweißpunkte wurden in Abständen von ca. 5 mm auf einer Bahnbreite von 45 mm in gleichmäßiger Verteilung angeordnet. Es resultierte eine Verbundfolie, die aufgrund des außenseitigen Faservlieses textile Eigenschaften aufwies, luftdurchlässig war und streifenelastisches Material enthielt.

## Patentansprüche

1. Verfahren zur Herstellung einer luftdurchlässigen Verbundfolie mit textiler Oberfläche, die elastische und nichtelastische Bereiche aufweist,
wobei mindestens ein in Querrichtung elastischer Folienstreifen als elastische Einlage zwischen zwei Materialbahnen aus Faservlies eingebracht wird, deren Bahnbreite größer ist als die Breite des Folienstreifens,
wobei die neben der Einlage unmittelbar in Kontakt stehenden Abschnitte der aus Faservlies bestehenden Materialbahnen unter Bildung eines nichtelastischen Bereiches der Verbundfolie verbunden werden und
wobei der Kaschierverbund anschließend eine Ultraschallschweißstation durchläuft, in der die elastische Einlage durch punktförmige Schweißungen unter Beibehaltung der Substanz des Faservlieses aufgeschmolzen und dabei unter Bildung von luftdurchlässigen Strukturen an diskreten Punkten mit den aus Faservlies bestehenden Deckschichten verbunden wird.

2. Verfahren nach Anspruch 1, **dadurch gekennzeichnet, dass** mehrere parallele, zueinander beabstandete Streifen zwischen die aus Faservlies bestehenden Materialbahnen eingebracht werden.

3. Verfahren nach Anspruch 1 oder 2, **dadurch gekennzeichnet, dass** die aus Faservlies bestehenden Deckschichten in den nichtelastischen Bereichen der Verbundfolie flächig miteinander verklebt werden.

4. Verfahren nach einem der Ansprüche 1 bis 3, **dadurch gekennzeichnet, dass** der Kaschierverbund in der Ultraschallschweißstation über eine Schweißwalze mit umfangsseitig vorstehenden Schweißstacheln geführt wird, wobei an den Kontaktflächen zwischen den Schweißstacheln und dem Kaschierverbund Ultraschallschwingungen erzeugt werden.

5. Verfahren nach einem der Ansprüche 1 bis 4, **dadurch gekennzeichnet, dass** als elastische Einlage ein Folienstreifen aus einem thermoplastischen Elastomer oder ein durch Coextrusion hergestellter mehrschichtiger Folienstreifen mit mindestens einer Schicht aus einem thermoplastischen Elastomer verwendet wird.

6. Verfahren nach einem der Ansprüche 1 bis 5, **dadurch gekennzeichnet, dass** die aus Faservlies bestehenden Materialbahnen zumindest in den Abschnitten, die mit der elastischen Einlage verbunden werden, quer zur Laufrichtung vorverstreckt werden bevor der Kaschierverbund hergestellt wird.

7. Verfahren nach einem der Ansprüche 1 bis 6, **dadurch gekennzeichnet, dass** der die Ultraschallschweißstation verlassende Kaschierverbund quer zur Abzugsrichtung gerekt oder in den elastischen Bereichen einer inkrementalen Verstreckung unterworfen wird.

## Claims

1. A process for producing a composite film which is pervious to air and which has a textile surface, and which comprises elastic and non-elastic regions,
wherein at least one film strip which is elastic in a transverse direction is introduced as an elastic insert between two lengths of material, the width of which lengths is greater than the width of the film strip,
wherein the sections of the lengths of material which consist of a fibrous web material and which are directly in contact near the inserts are joined forming a non-elastic region of the composite film, and
wherein the laminated composite subsequently passes through an ultrasonic welding station in which the elastic insert is fused by spot welds whilst retaining the substance of the fibrous web material, and in the course of this procedure is bonded at discrete points to the outer layers consisting of a fibrous web material, with the formation of structures which are pervious to air.

2. A process according to claim 1, **characterised in that** a plurality of parallel strips which are spaced apart from each other is introduced between the lengths of material consisting of a fibrous web material.

3. A process according to claim 1 or 2, **characterised in that** the outer layers consisting of a fibrous web material are adhesively bonded to each other two-dimensionally in the non-elastic regions of the composite film.

4. A process according to claims 1 to 3, **characterised in that** in the ultrasonic welding station the laminated composite is passed over a welding roll comprising circumferentially protruding welding pins, wherein ultrasonic vibrations are generated at the contact faces between the welding pins and the laminated composite.

5. A process according to any one of claims 1 to 4, **characterised in that** a film strip made of a thermoplastic elastomer, or a multi-layer film strip which is produced by coextrusion and which comprises at least one layer made of a thermoplastic elastomer, is used as an elastic insert.

6. A process according to any one of claims 1 to 5, **characterised in that** the lengths of material consisting of a fibrous web material are pre-stretched transversely to their direction of travel, at least in the sections which are bonded to the elastic insert, before the laminated composite is produced.

7. A process according to any one of claims 1 to 6, **characterised in that** the laminated composite leaving the ultrasonic welding station is stretched transversely to its direction of discharge or is subjected to incremental stretching in the elastic regions.

## Revendications

1. Procédé de fabrication d'un film multicouche perméable à l'air avec une surface textile, qui présente des zones élastiques et non élastiques,
au moins une bande de film, élastique dans le sens transversal, étant disposée en tant qu'élément intermédiaire élastique entre deux nappes de matériau en voile fibreux, dont la largeur de nappe est supérieure à la largeur de la bande de film,
les tronçons des nappes de matériau constituées de voile fibreux, qui se trouvent directement en contact, à côté de l'élément intermédiaire, étant reliés par formation d'une zone non élastique du film multicouche et
le composite stratifié pénétrant, ensuite, dans un poste de soudage par ultrasons, dans lequel l'élément intermédiaire élastique est fondu par des soudures par points tout en conservant la substance du voile fibreux et étant ainsi lié par formation de structures perméables à l'air, en des points discrets, aux couches de recouvrement constituées de voile fibreux.

2. Procédé selon la revendication 1, **caractérisé en ce que** plusieurs bandes parallèles, écartées l'une de l'autre, sont posées entre les nappes de matériau constituées de voile fibreux.

3. Procédé selon la revendication 1 ou 2, **caractérisé en ce que** les couches de recouvrement, constituées de voile fibreux, sont collées en nappe entre elles, dans les zones non élastiques du film multicouche.

4. Procédé selon l'une des revendications 1 à 3, **caractérisé en ce que** le composite stratifié est guidé dans le poste de soudage par ultrasons par l'intermédiaire d'un cylindre de soudage avec des picots de soudage faisant saillie en périphérie, des vibrations ultrasonores étant produites sur les surfaces de contact, entre les picots de soudage et le composite stratifié.

5. Procédé selon l'une des revendications 1 à 4, **caractérisé en ce qu'**on utilise, comme élément intermédiaire élastique, une bande de film en élastomère thermoplastique ou une bande de film à plusieurs couches, fabriquée par co-extrusion, avec au moins une couche en élastomère thermoplastique.

6. Procédé selon l'une des revendications 1 à 5, **caractérisé en ce que** les nappes de matériau constituées de voile fibreux, sont étirées, au moins dans les tronçons, qui sont liés à l'élément intermédiaire élastique, transversalement par rapport au sens machine, avant que le composite stratifié ne soit fabriqué.

7. Procédé selon l'une des revendications 1 à 6, **caractérisé en ce que** le composite stratifié, qui quitte le poste de soudage par ultrasons, est soumis, transversalement par rapport au sens d'évacuation, directement ou dans les zones élastiques, à un étirage incrémentiel.
